(19) Europäisches Patentamt
European Patent Office
Office européen des brevets

(11) Veröffentlichungsnummer: **0 073 377**
**B1**

(12) # EUROPÄISCHE PATENTSCHRIFT

(45) Veröffentlichungstag der Patentschrift: **21.11.85**

(51) Int. Cl.$^4$: **C 09 B 45/10**// D06P1/10

(21) Anmeldenummer: **82107341.8**

(22) Anmeldetag: **13.08.82**

(54) **Asymmetrische 1 : 2-Chromkomplexfarbstoffe und Verfahren zu ihrer Herstellung und zum Färben.**

(30) Priorität: **25.08.81 DE 3133569**

(43) Veröffentlichungstag der Anmeldung: **09.03.83 Patentblatt 83/10**

(45) Bekanntmachung des Hinweises auf die Patenterteilung: **21.11.85 Patentblatt 85/47**

(84) Benannte Vertragsstaaten: **CH DE FR GB LI**

(56) Entgegenhaltungen:
**DE-C- 913 177**
**DE-C- 940 483**

(73) Patentinhaber: **BAYER AG**
**Konzernverwaltung RP Patentabteilung**
**D-5090 Leverkusen 1 Bayerwerk (DE)**

(72) Erfinder: **Scholl, Walter, Dr.**
**Bilharzstrasse 22**
**D-5000 Koeln 80 (DE)**

**EP 0 073 377 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft 1 : 2-Chromkomplexfarbstoffe, die in Form der freien Säure der Formel

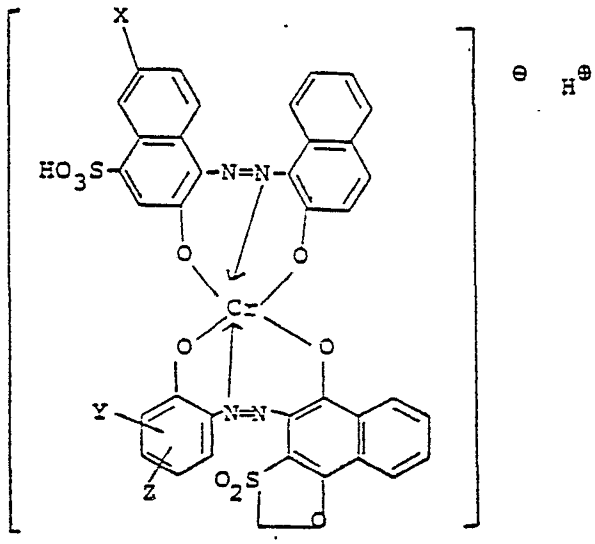

worin
X Wasserstoff oder Nitro,
Y Wasserstoff, Nitro oder Chlor und
Z Wasserstoff, Nitro, Chlor, Alkyl, Alkoxy, Alkylsulfonyl, Arylsulfonyl oder $SO_2NW_1W_2$ und
$W_1$ und $W_2$ Wasserstoff, Aryl oder Alkyl bedeuten,
mit der Maßgabe, daß Y und Z nicht gleichzeitig für Nitro stehen, entsprechen.

Geeignete im beliebigen Zusammenhang genannte Alkyl- und Alkoxygruppen sind solche mit 1-4 C-Atomen, die vorzugsweise nicht weiter substituiert sind. Besonders bevorzugt sind Methyl, Ethyl bzw. Methoxy und Ethoxy.

Geeignete Arylreste sind insbesondere gegebenenfalls substituierte Phenylreste mit Substituenten wie Halogen, insbesondere Cl und Br, $NO_2$, $C_1$-$C_4$-Alkoxy, $C_1$-$C_4$-Alkyl.

Bevorzugte Farbstoffe sind solche der Formel

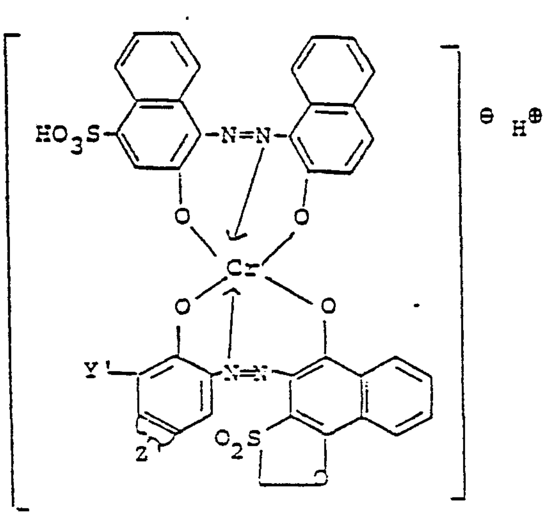

(II)

worin
Y' H, Cl oder $NO_2$,
Z' H, $NO_2$ oder $SO_2W'_1W'_2$, Cl
$W'_1$ und $W'_2$ H oder $C_1$-$C_2$-Alkyl bedeuten,
mit der Maßgabe, daß Y' und Z' nicht gleichzeitig $NO_2$ bedeuten.

Die neuen Chromkomplexfarbstoffe werden in an sich bekannter Weise (vgl. z. B. DE-A 2 500 550, 2 504 787 und 2 638 222) hergestellt, indem man den einen der Azofarbstoffe der Formeln

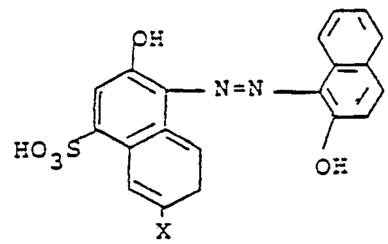

(III)

und

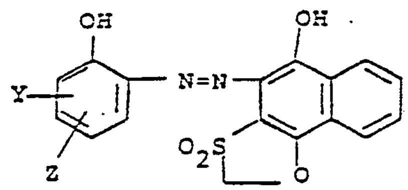

(IV)

mit einem chromabgebenden Mittel in den 1 : 1-Chromkomplex überführt und diesen anschließend mit dem nichtmetallisierten Farbstoff der Formel (IV) oder (III) umsetzt. Vorzugsweise stellt man den 1 : 1-Chromkomplex aus dem Farbstoff der Formel (III) her und lagert den Farbstoff (IV) an.

Die Monoazofarbstoffe der Formel (III) werden in bekannter Weise durch Kuppeln von diazotierten 1-Amino-2-hydroxy-naphthalin-4-sulfosäuren auf β-Naphtol erhalten, diejenigen der Formel (IV) durch Kuppeln eines diazotierten Aminophenols auf 4'-Hydroxynaphtho-(2',1' : 4,5)-oxathiol-S-dioxid, das beispielsweise in DE-A 913 177, 940 483 und 1 011 574 beschrieben ist.

Als Diazokomponenten für Farbstoffe der Formel (IV) kommen in Betracht :

4-Sulfonsäureamid-2-amino-1-hydroxybenzol
4-Sulfonsäuremethylamid-2-amino-1-hydroxybenzol
4-Sulfonsäuredimethylamid-2-amino-1-hydroxybenzol
4-Sulfonsäureanilid-2-amino-1-hydroxybenzol
4-Ethyl-sulfon-2-amino-1-hydroxy-benzol
5-Sulfonsäureamid-2-amino-1-hydroxybenzol
5-Sulfonsäuremethylamid-2-amino-1-hydroxybenzol
5-Sulfonsäure-dimethylamid-2-amino-1-hydroxybenzol
5-Sulfonsäureanilid-2-amino-1-hydroxybenzol
2-Amino-1-hydroxybenzol
4- oder 5-Chlor-2-amino-1-hydroxybenzol
4- oder 5-Nitro-2-amino-1-hydroxybenzol
4-Methyl-2-amino-1-hydroxybenzol
4-Methoxy-2-amino-1-hydroxybenzol
4,6-Dichlor-2-amino-1-hydroxybenzol
4-Chlor-5-nitro-2-amino-1-hydroxybenzol
4-Chlor-6-nitro-2-amino-1-hydroxybenzol
6-Chlor-4-nitro-2-amino-1-hydroxybenzol
6-Nitro-4-methyl-2-amino-1-hydroxybenzol.

Die Überführung der Farbstoffe der Formel (III) oder (IV) in den 1 : 1-Chromkomplex erfolgt nach üblichen, an sich bekannten Methoden (vgl. z. B. DE-A 1 008 254, 1 012 007 und 1 225 318), z. B. indem man ihn in saurem Medium mit einem Salz des dreiwertigen Chroms, wie Chromformiat, Chromsulfat oder Chromfluorid, bei Siedetemperatur oder gegebenenfalls bei 100 °C übersteigenden Temperaturen umsetzt. Dreiwertiges Chrom kann auch im Reaktionsgemisch aus Chrom-VI-Verbindungen erzeugt werden, wenn man gleichzeitig ein Reduktionsmittel zugibt, wie z. B. Glukose. Man kann die Metallisierung auch in Gegenwart von organischen Lösungsmitteln vornehmen. Bevorzugt arbeitet man dann möglichst unter Ausschluß von Wasser in organischen Lösungsmitteln wie Alkoholen oder Ketonen.

Im allgemeinen erweist es sich als vorteilhaft, die beim vorliegenden Verfahren benötigten Ausgangsfarbstoffe nach ihrer Herstellung und Ausscheidung nicht zu trocknen, sondern als feuchte Paste weiter zu verarbeiten.

Vorteilhafterweise überführt man den sulfogruppenhaltigen Farbstoff in den 1 : 1-Cr-Komplex.

Die Umsetzung des 1 : 1-Chromkomplexes des Farbstoffes der Formel (III) bzw. (IV) mit dem metallfreien Farbstoff der Formel (IV) bzw. (III) erfolgt zweckmäßig in neutralem bis schwach alkalischem Medium bei z. B. Temperaturen zwischen 50 und 120 °C. Man kann in organischen Lösungsmitteln arbeiten oder in wäßriger lösung, wobei Zusätze von Lösungsmitteln wie z. B. von Alkoholen oder Dimethylformamid gegebenenfalls die Umsetzung fördern können. Es empfiehlt sich im allgemeinen, möglichst äquivalente Mengen des chromhaltigen 1 : 1-Komplexes und des metallfreien Farbstoffes miteinander umzusetzen, wobei das Molekularverhältnis zwischen metallfreiem Farbstoff und 1 : 1-Komplex zweckmäßig mindestens 0,85 : 1 und höchstens 1 : 0,85 beträgt ; ein Überschuß an metallhaltigem Farbstoff wirkt sich in der Regel weniger nachteilig aus als ein solcher an metallfreiem Farbstoff.

Anstelle einheitlicher Farbstoffe der Formel (IV) oder (III) kann man auch Gemische entsprechender Azofarbstoffe verwenden.

Die neuen Chrom-Mischkomplexe werden vorteilhaft in Form ihrer Salze, insbesondere Alkali- (z. B. Na und Li) oder auch Ammoniumsalze oder Salze von organischen Aminen mit positiv geladenem Stickstoffatom isoliert und eignen sich vor allem zum Färben und Bedrucken amidgruppenhaltiger Materialien, wie Seide, Leder sowie für synthetische Polyamide und insbesondere Wolle. Das Färben mit diesen preiswerten Farbstoffen erfolgt in üblicher Weise. Die erhaltenen Färbungen sind gleichmäßig und zeigen gute Allgemeinechtheiten.

Beispiel 1

140 g wäßrige Farbstoffpaste, die 0,1 Mol 1 : 1-Chromkomplex aus dem Monoazofarbstoff 1-Amino-2-hydroxy-naphthalin-4-sulfosäure → β-Naphthol enthält sowie 225 g wäßrige Paste, die 0,055 Mol Monoazofarbstoff 5-Nitro-2-aminophenol → Naphthydrochinonmethylensulfonether sowie 0,045 Mol Monoazofarbstoff 4-Chlor-2-aminophenol → « Naphthydrochinonmethylensulfonether » enthält, werden in 600 ml Wasser verrührt, auf 80-90 °C erwärmt und bei pH 7-8, den man mit Natronlauge 40 %ig hält, solange verrührt, bis die Umsetzung zum Chrommischkomplex beendet ist. Dann kühlt man auf 70 °C ab und scheidet den Farbstoff durch Zugabe von Natriumchlorid aus. Nach dem Absaugen und Trocknen bei 70 °C i.V. erhält man ein dunkles Pulver, das Wolle und synth. Polyamid in Marineblautönen mit guten Echtheiten färbt.

Weitere Farbstoffe mit ähnlichen Eigenschaften erhält man in analoger Weise durch Umsetzen der 1 : 1-Chromkomplexe der in der folgenden Spalte I angegebenen Monoazoverbindungen mit den in Spalte II aufgeführten, metallfreien Monoazoverbindungen.

| | I | II | Farbton auf Wolle oder Polyamid |
|---|---|---|---|
| 2 | 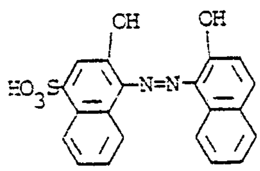 | 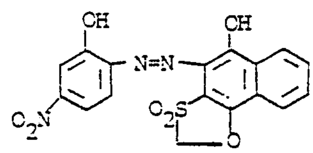 | marineblau |
| 3 | 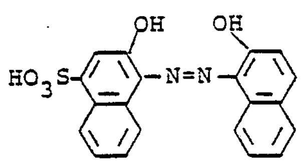 | 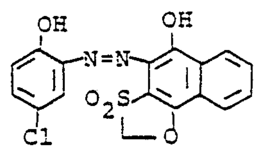 | marineblau |
| 4 | 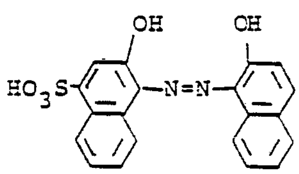 | 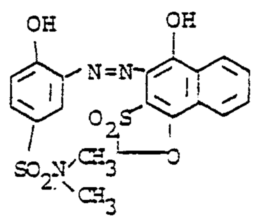 | " |
| 5 | 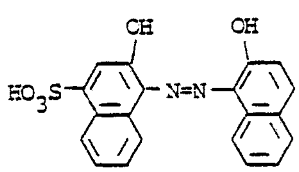 | 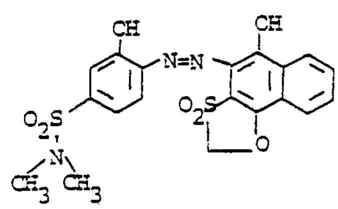 | " |
| 6 | 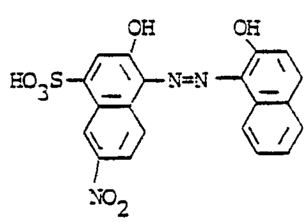 | 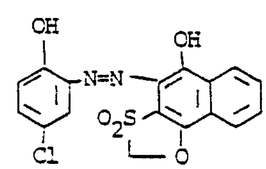 | " |

**Patentansprüche**

1. Chromkomplexfarbstoffe der Formel, die in Form der freien Säure der Formel

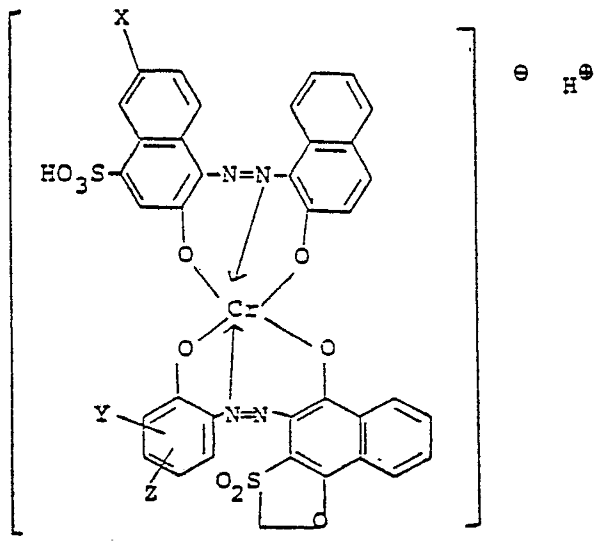

(I)

entsprechen, worin
X Wasserstoff oder Nitro,
Y Wasserstoff, Nitro oder Chlor und
Z Wasserstoff, Nitro, Chlor, Alkyl, Alkoxy, Alkylsulfonyl, Arylsulfonyl oder $SO_2NW_1W_2$ und
$W_1$ und $W_2$ Wasserstoff, Aryl oder Alkyl bedeuten,
mit der Maßgabe, daß Y und Z nicht gleichzeitig für Nitro stehen.

2. Chromkomplexfarbstoffe gemäß Anspruch 1, dadurch gekennzeichnet, daß die darin genannten Alkyl- und Alkoxyreste 1-4 C-Atome enthalten und die Arylreste gegebenenfalls durch Cl, Br, $NO_2$, $C_1$-$C_4$-Alkoxy oder $C_1$-$C_4$-Alkyl substituierte Phenylreste sind.

3. Chromkomplexfarbstoffe gemäß Anspruch 1 der Formel

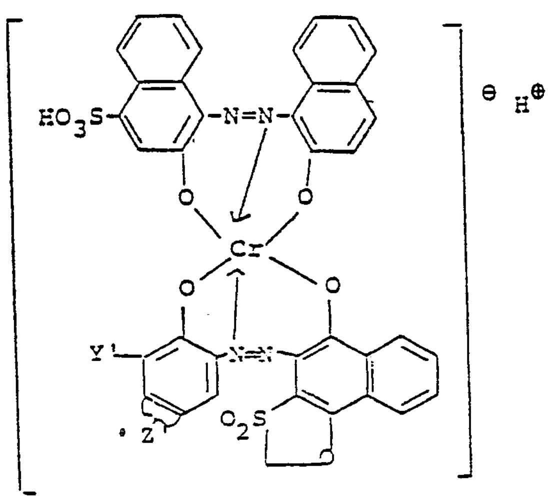

(II)

worin
Y' H, Cl oder $NO_2$,
Z' H, $NO_2$ oder $SO_2W'_1W'_2$, Cl
$W'_1$ und $W'_2$ H oder $C_1$-$C_2$-Alkyl bedeuten,
mit der Maßgabe, daß Y' und Z' nicht gleichzeitig $NO_2$ bedeuten.

4. Chromkomplexfarbstoff der Formel

(Siehe Formel Seite 6 f.)

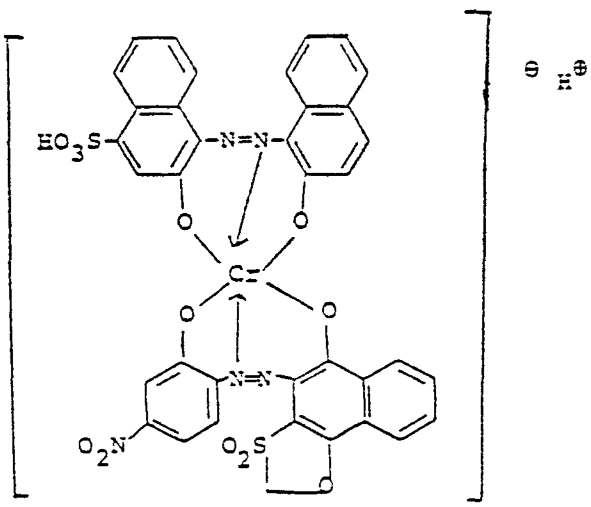

5. Mischung der Chrom-Mischkomplexe der Farbstoffe 1-Amino-2-hydroxynaphthalin-4-sulfosäure → β-Naphthol + 4-Chlor-2-aminophenol → Naphthydrochinonmethylensulfonether und 1-Amino-2-hydroxynaphthalin-4-sulfosäure → β-Naphthol + 5-Nitro-2-aminophenol → Naphthydrochinonmethylensulfonether.

6. Verfahren zur Herstellung von Farbstoffen gemäß Anspruch 1, dadurch gekennzeichnet, daß man den einen der Azofarbstoffe der Formeln

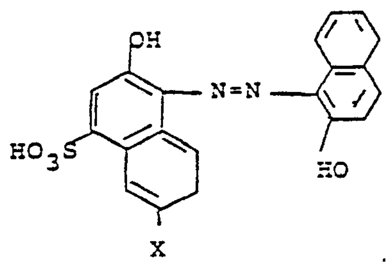

(III)

und

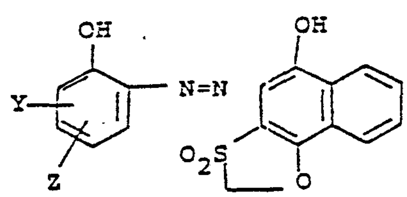

(IV)

mit einem chromabgebenden Mittel in den 1 : 1-Chromkomplex überführt und diesen anschließend mit dem nichtmetallisierten Farbstoff der Formel (IV) oder (III) umsetzt.

7. Verfahren zum Färben von amidgruppenhaltigen Materialien, dadurch gekennzeichnet, daß man Farbstoffe gemäß Anspruch 1 verwendet.

## Claims

1. Chromium complex dyestuffs of the formula which, in the form of the free acid correspond to the formula

(See formula page 7)

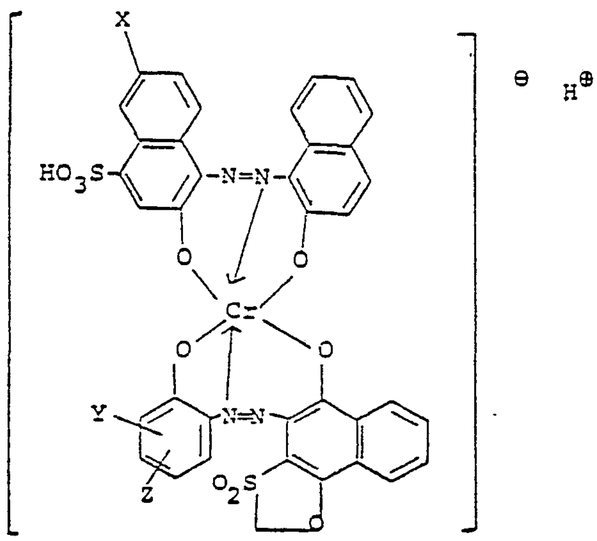

(I)

wherein

X denotes hydrogen or nitro,

Y denotes hydrogen, nitro or chlorine, and

Z denotes hydrogen, nitro, chlorine, alkyl, alkoxy, alkylsulphonyl, arylsulphonyl or $SO_2NW_1W_2$ and $W_1$ and $W_2$ denote hydrogen, aryl or alkyl, with the proviso that

Y and Z do not simultaneously represent nitro.

2. Chromium complex dyestuffs according to Claim 1, characterised in that the alkyl and alkoxy radicals mentioned therein contain 1-4 C atoms and the aryl radicals are phenyl radicals optionally substituted by Cl, Br, $NO_2$, $C_1$-$C_4$alkoxy or $C_1$-$C_4$-alkyl.

3. Chromium complex dyestuffs according to Claim 1 of the formula

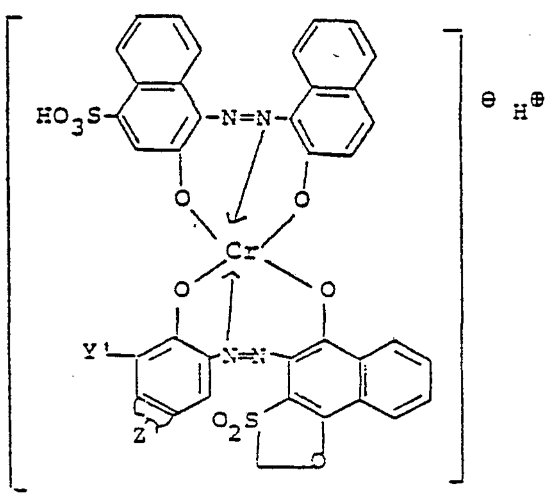

(II)

wherein

Y' denotes H, Cl or $NO_2$,

Z' denotes H, $NO_2$ or $SO_2W'_1W'_2$ or Cl and

$W'_1$ and $W'_2$ denote H or $C_1$-$C_2$-alkyl, with the proviso that

Y' and Z' do not simultaneously denote $NO_2$.

4. Chromium complex dyestuff of the formula

(See formula page 8)

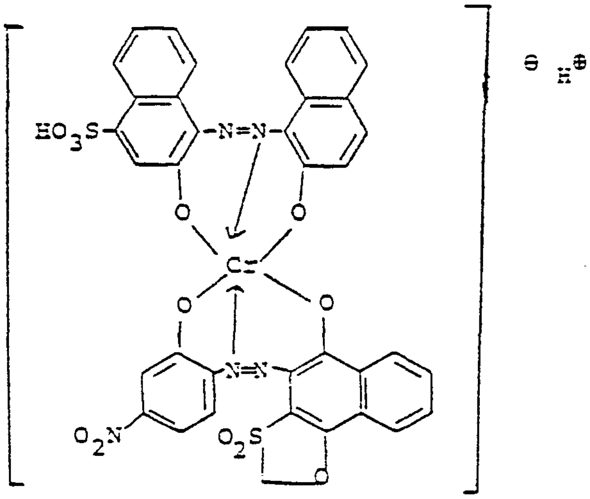

5. Mixture of mixed chromium complexes of the dyestuffs 1-amino-2-hydroxynaphthalene-4-sulphonic acid → β-naphthol + 4-chloro-2-aminophenol → naphthhydroquinone methylene sulphone ether and 1-amino-2-hydroxynaphthalene-4-sulphonic acid → β-naphthol + 5-nitro-2-aminophenol → naphthhydroquinone methylene sulphone ether.

6. Process for preparing dyestuffs according to Claim 1, characterised in that one of the azo dyestuffs of the formulae

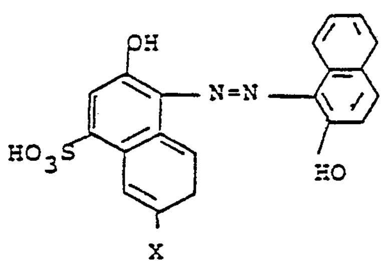

(III)

or

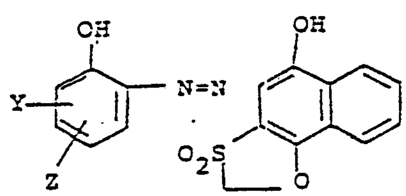

(IV)

is converted with a chromium-donating agent into the 1 : 1 chromium complex, which is then reacted with the non-metallised dyestuff of the formula (IV) or (III).

7. Process for dyeing materials containing amide groups, characterised in that dyestuffs according to Claim 1 are used.

**Revendications**

1. Colorants complexes de chrome qui, sous la forme de l'acide libre, répondent à la formule :

(Voir formule page 9)

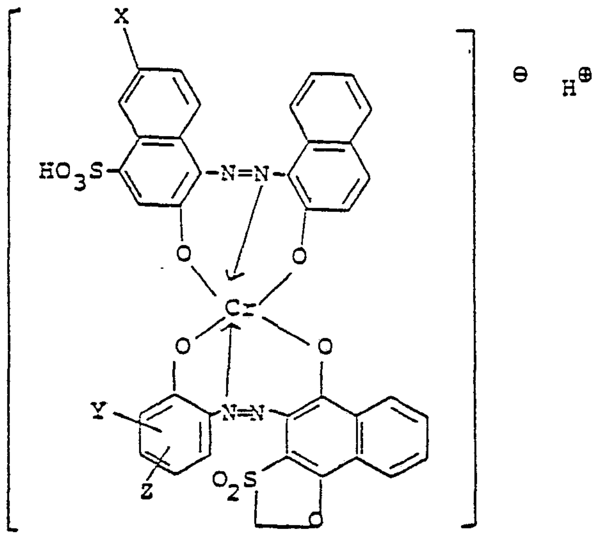

(I)

dans laquelle

X désigne l'hydrogène ou le groupe nitro,

Y est l'hydrogène, le groupe nitro ou le chlore et

Z est l'hydrogène, le groupe nitro, le chlore, un groupe alkyle, alkoxy, alkylsulfonyle, arylsulfonyle ou $SO_2NW_1W_2$ et

$W_1$ et $W_2$ représentent l'hydrogène ou un groupe aryle ou alkyle,

sous réserve que Y et Z ne représentent pas en même temps un groupe nitro.

2. Colorants complexes de chrome suivant la revendication 1, caractérisés en ce que les restes alkyle et alkoxy qui y sont mentionnés contiennent 1 à 4 atomes de carbone et des restes aryle sont des restes phényle éventuellement substitués par Cl, Br, $NO_2$, un groupe alkoxy en $C_1$ à $C_4$ ou un groupe alkyle en $C_1$ à $C_4$.

3. Colorants complexes de chrome suivant la revendication 1, de formule

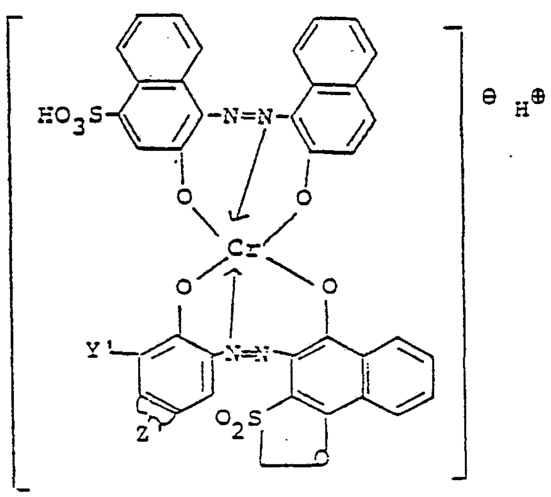

(II)

dans laquelle

Y' représente H, Cl ou $NO_2$,

Z' représente H, $NO_2$ ou $SO_2W'_1W'_2$, Cl

$W'_1$ et $W'_2$ représentent H ou un groupe alkyle en $C_1$ ou $C_2$,

sous réserve que Y' et Z' ne représentent pas en même temps un groupe $NO_2$.

4. Colorant complexe de formule

(Voir formule page 10)

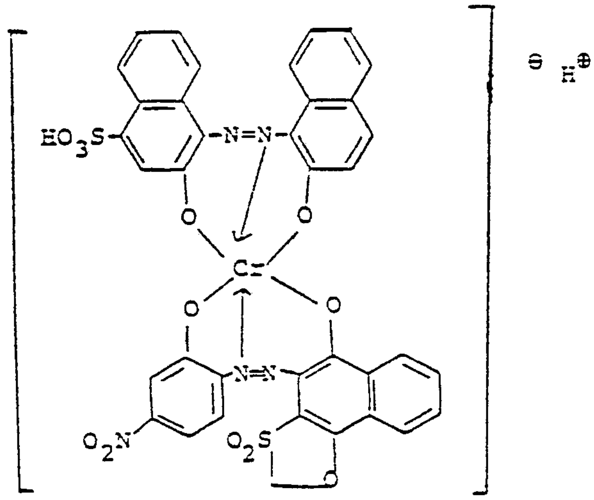

5. Mélange des complexes mixtes de chrome des colorants acide 1-amino-2-hydroxynaphtalène-4-sulfonique → β-naphtol + 4-chloro-2-aminophénol → éther de naphthydroquinoneméthylènesulfone et acide 1-amino-2-hydroxynaphtalène-4-sulfonique → β-naphtol + 5-nitro-2-aminophénol → éther de naphthydroquinone méthylènesulfone.

6. Procédé de production de colorants suivant la revendication 1, caractérisé en ce qu'on transforme l'un des colorants azoïques des formules

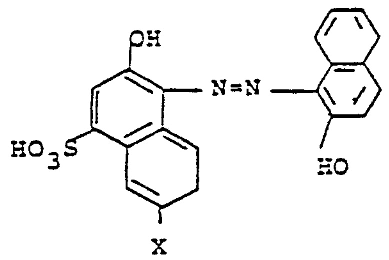

(III)

et

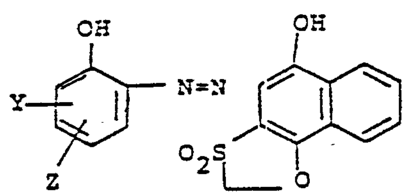

(IV)

avec un agent cédant du chrome en le complexe de chrome à 1 : 1 et on fait ensuite réagir ce dernier avec le colorant ne contenant pas de métal, de formule (IV) ou (III).

7. Procédé de teinture de matières portant des groupes amide, caractérisé en ce qu'on utilise des colorants suivant la revendication 1.